Europäisches Patentamt

**European Patent Office**

**Office européen des brevets**

(19)

(11) Publication number: **0 132 048**

**A1**

(12) **EUROPEAN PATENT APPLICATION**

(21) Application number: **84304024.7**

(22) Date of filing: **14.06.84**

(51) Int. Cl.⁴: **F 16 F 1/26**
**B 60 G 11/00**

(30) Priority: **20.06.83 GB 8316690**

(43) Date of publication of application:
**23.01.85 Bulletin 85/4**

(84) Designated Contracting States:
**IT**

(71) Applicant: **The Secretary of State for Trade and Industry
in Her Britannic Majesty's Government of the United
Kingdom of Great Britain and
Northern Ireland 1 Victoria Street
London SW1H OET(GB)**

(72) Inventor: **Scowen, Geoffrey David
Broomheath Galston
Aryshire Scotland(GB)**

(74) Representative: **Wildman, David Brian et al,
Procurement Executive Ministry of Defence Patents
1A(4), Room 2014 Empress State Building Lillie Road
London SW6 1TR(GB)**

(54) **Springs for high specific energy storage.**

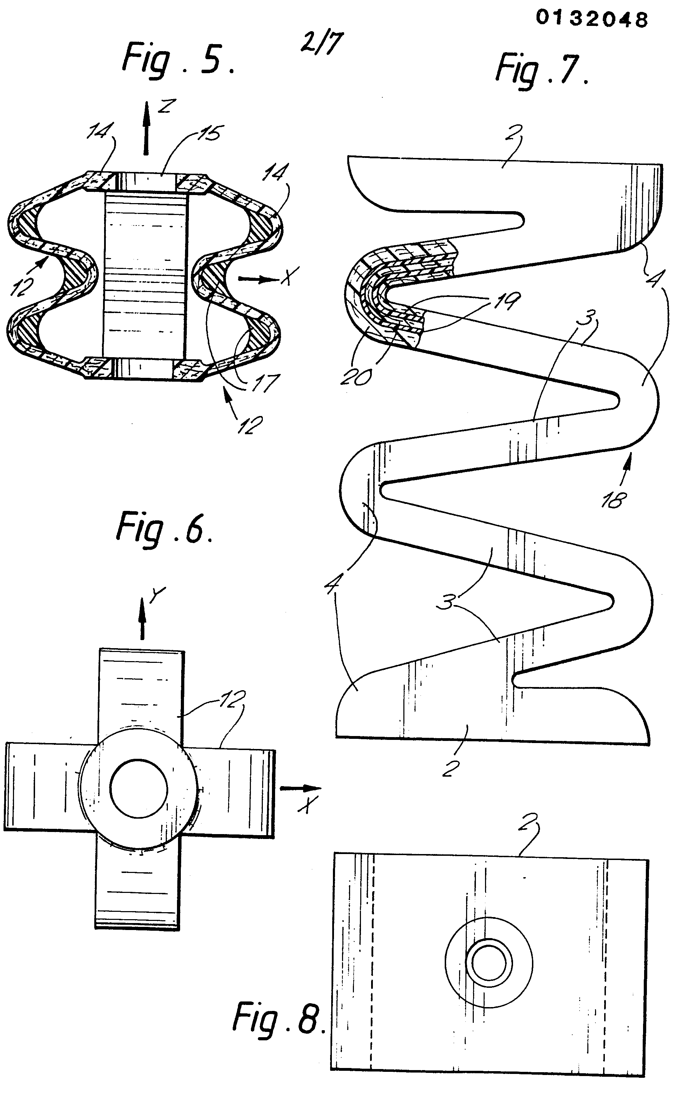

(57) A spring element (12) comprises a strip of fibre-reinforced plastics material formed as a zig-zag consisting of a plurality of limbs lying in substantially the same plane and joined at their ends by reflex portions (14). The strip includes at least a proportion of fibres aligned in its generally longitudinal sense, sufficient to spread stress concentrations away from the reflex portions, in use. The ratio of the limb length to the radius of the reflex portions is desirably in the range 0.2 to 200, preferably 0.5 to 30, and this leads to an extremely compact spring. Several elements (12) can be assembled together, possibly in different planes (eg Fig 6) to produce a spring assembly whose spring rates in different modes of deflection are easily controlled. The spring elements (12) may include elastomer either as blocks (17) in the relex portions (14) or as layers interleaved with fibre reinforced plastics layers (eg Fig 7). The elastomer and plastics materials can be cured in mutual contact, to provide cross-linking between them.

Fig.7.

Croydon Printing Company Ltd

Title: Springs for High Specific Energy Storage

This invention concerns springs of the form in which several limb portions are joined together by curved reflex portions to form a zig-azg in which all of the limbs and curved portions lie in substantially the same plane.

Springs of this general kind have been proposed in metal for a limited number of uses, such as for example the well-known pocket wrist exerciser. However, for purposes in which the spring is required to withstand heavy loading such springs have not been found suitable, especially in those cases where the load is applied repeatedly or cyclically as for example in a vehicle suspension system. This is because in such a metal spring the stresses are concentrated at the reflex portions, and this can lead to early failure either as a result of overloading or fatigue. For these reasons, conventional helical or leaf springs are currently used for vehicle suspensions.

Some interest has recently been shown in the development of helical springs formed of fibre-reinforced plastics materials. This type of material offers considerable advantages for some applications, such as high corrosion resistance, lightness of weight, and the ability to tailor the response pattern of the spring closely to requirements in ways not readily possible with conventional metal springs. Such springs can possess surprisingly high strength and stiffness.

It has now been appreciated by the inventor that springs of fibre-reinforced plastics material can with advantage be made instead in the form of the zig-zag springs discussed hereinbefore.

Accordingly the present invention provides a spring element comprising a continuous strip of fibre-reinforced plastics material including reinforcing fibres within a plastics matrix, the strip being disposed when unstressed in the form of a zig-zag consisting of at least 3 limbs lying in substantially the same plane, each adjacent pair of limbs being joined together at one end by link portion of reflex form and integral therewith, and wherein the fibres are aligned generally in the longitudinal sense of the strip.

Springs of this form are described by the Applicant as sulcated springs.

Preferred such fibre arrangements are

i.     100% of fibres aligned in the longitudinal direction of the strip, or

ii. 100% of fibres aligned sysmmetrically at up to $\pm$ 45° to the longitudinal direction of the strip, or

iii. 30 to 70% of fibres aligned in the longitudinal direction of the strip together with 30 to 70% of fibres aligned at $\pm$ 30° to $\pm$ 60° to the longitudinal direction of the strip.

The Applicant has found that by virtue of the general longitudinal alignment of the fibres, the high stresses which occur in the reflex portions in the known steel springs are spread. The fibres transmit the stresses via the matrix to regions of the limb portions which are adjacent the reflex portions, and the intense stresses which develop in prior art springs of homogeneous material at the reflex portion are thus distributed over a wider region in the case of spring elements in accordance with the invention. The problems of failure as a result of stress concentration and/or fatigue are thus considerably alleviated. This realisation by the Applicant thus opens up possibilities hitherto unconsidered for zig-zag springs which can withstand considerable loads, possibly in combination with repeated stress reversals.

The spring stiffness of such a spring element can furthermore easily be arranged to vary progressively with deflection, and the response of such an element to an applied load can thus readily be tailored to suit design requirements, in ways and to an extent not possible with springs of prior art form or of homogeneous material. This results partly from the novel geometry of spring elements according to the invention, providing a number of geometric parameters which can be varied in addition to the choice of materials and fibre orientation. With a conventional spring of generally helical form, the number of geometric factors which can readily be varied is far smaller.

In particular, the provision of distinct limb and reflex portions renders possible the design of spring elements capable of exceptionally high specific energy storage, ie spring elements in accordance with the invention are exceedingly compact. This is because the energy-storing spring deflection can be distributed well throughout the limbs and the reflex portions. This factor also renders them highly advantageous for example in vehicle suspensions.

United States Patent No 2913240 discloses a spring element formed

of glass fibre reinforced plastics material. The spring elements described therein are of sinuous form, fabricated from rods, and are apparently intended principally for light duties. These prior art spring elements are generally of sinusoidal form, and do not exhibit distinct limb and reflex portions. This geometry does not permit an efficient distribution of energy storage throughout the spring material. Furthermore, compactness of design is inherently impossible with this geometry. Furthermore, the sinuous geometry disclosed in this United States patent will lead to instability against buckling under compressive loads. Euler or column buckling is liable to occur in the plane of the spring, especially when designing for high specific energy storage, which requires a large number of limbs within a limited space envelope.

Although the limbs are most conveniently straight, and the reflex portions are most conveniently of circular arcuate form, there is no absolute reason why this should be so. For this reason, it is convenient to define the limb portion as being that part of the spring element which has a reflex portion at each end thereof (or at one end only in the case of end limbs), the boundaries between the reflex and limb portions being the points at which the tangent to the reflex portion at one end of the limb is parallel with the tangent to the reflex portion at the other end.

The advantage of high specific energy storage (ie compactness of the spring element for a given duty) are generally found to occur where the ratio L/R falls between 0.2 and 200, where L is the limb length as measured between the said boundaries, and R is the mean radius of the reflex portions (ie the radius of the circular arcs which do or could form the reflex portions. For most applications the ratio L/R should preferably fall between 0.5 and 30, as this provides for greater specific energy storage, ie better compactness for a given duty.

According to further aspect of the invention, the spring element comprises one or more distinct zones of a resilient material.

In one form of the invention which has a great advantage when a progressive non-linear increase in stiffness with compressive deflection is desired, a zone of resilient material is constituted by a block of the resilient material located between an adjacent pair of limbs and within the reflex section of the link portion joining that pair.

Alternatively or additionally, a zone of resilient material can be constituted by a layer of the resilient material running lengthwise of the strip between zones of the matrix material.

Very advantageously the resilient material is an elastomeric material which is cured in contact with and simulataneously with the plastics matrix material so that molecular cross-linking is present between the elastomeric material and the plastics matrix material. This can lead to a very strong fatigue-resistant bond.

Suitable elastomeric materials include urethane, polyurethanes, silicone elastomer, natural rubber, polyisoprene, styrene butadiene, butadiene, polyacrylics, isobutene, isoprene (butyl rubber), chloroprene (neoprene), nitrile butadiene, chlorosulphonated polyethylene, chlorinated polyethylene, ethylene propylene, fluorocarbon, epichlorohydrin, flyorosilicone, co-polyester, styrene co-polymer and olefins.

According to another highly advantageous facet of the invention, there is provided a spring assembly comprising a plurality of spring elements each in accordance with the invention. The plane of the limbs of at least one spring element may in some instances with advantage differ from that of at least one other.

In one convenient form of such an assembly, each spring element is so disposed that its plane lies radially with respect to a common axis.

The spring elements of the assembly can then be fastened together at their respective free ends.

In some cases it may be advantageous to provide a composite spring structure comprising two or more such assemblies nested one within another or stacked end to end.

The choice of fibre and matrix materials will depend upon the use for which the spring element is intended.

Suitable matrix materials include epoxy, polyester and vinylester resin, polyamide, polyimide PEEK (polyetheretherketone), PES (polyethersulphone), and polyetherimide.

Suitable fibres include carbon, glass, aromatic polyamide (eg Kevlar - Trade Mark) metallic fibres or wires, or mixtures including these fibres.

Another parameter which can easily be varied to suit particular

design requirements is the fibre lay-up.

The orientation of the fibres can for example be varied longitudinally of the strip of fibre-reinforced plastics material.

The invention will now be described by way of example only with reference to the accompanying drawings, of which

Figure 1 is a side elevation of a spring element in accordance with the invention.

Figure 2 is a side elevation of a spring element in accordance with the invention and provided with blocks of elastomeric material within the reflex portion of the link members.

Figure 3 is a sectional elevation of a spring assembly comprising four elements in accordance with the invention.

Figure 4 is a plan view of the spring assembly shown in Figure 4.

Figure 5 is a sectional elevation of a spring assembly comprising four elements in accordance with the invention, each element being provided with blocks of elastomeric material within the reflex portion of each link member.

Figure 6 is a plan view of the spring assembly shown in Figure 7.

Figure 7 is a side elevation, partly broken out to show constructional detail, of a spring element in accordance with the invention, incorporating zones of elastomeric material.

Figure 8 is a plan view of the spring element shown in Figure 9.

Figure 9 is a perspective view of a spring assembly incorporating four elements each similar to that shown in Figures 9 and 10.

Figures 10, 11 and 12 are perspective views of further forms of springs in accordance with the invention, each of the general form shown in Figure 9, but having elastomer additions.

Figure 13 is a perspective view of a part of a spring element illustrating some geometric parameters of a spring element in accordance with the invention, and

Figure 14 is a graphical representation of the performance of certain spring elements in accordance with the invention.

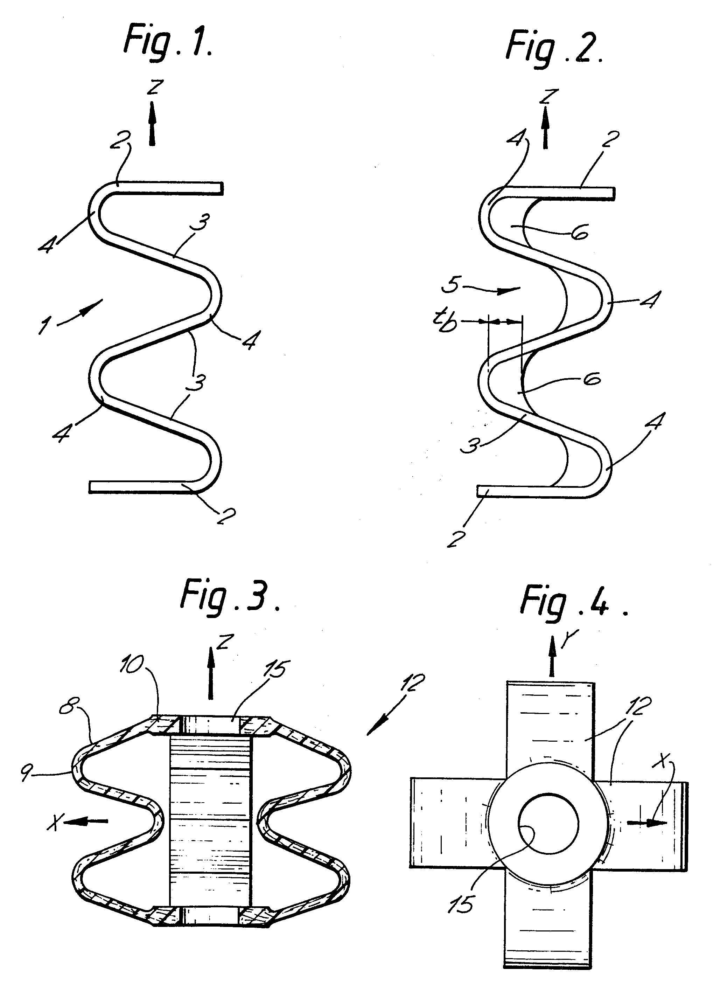

As shown in Figure 1, a simple form of spring element 1 in accordance with the invention comprises a strip of fibre-reinforced plastics material (consisting of reinforcing fibres within a plastics matrix), formed into a zig-zag shape. The element incorporates a pair of mutually parallel limbs 2 at its ends, and three inclined limbs 3, each adjacent pair of limbs (2 or 3) being linked by a reflex portion 4 of arcuate form. The limbs 2, 3 and the reflex portions 4 are all formed integrally from a continuous length of fibre-reinforced plastics material. An axial tensile load is conveniently applied to the spring element 1 in a direction indicated by the arrow Z (or a compressive load in the opposite direction) ie normal to the end limbs 2. If the composition of the element does not vary along its length, the spring response of the element will be approximately linear. The element 1 is particularly easy to fabricate, light in weight, and resistant to corrosion, all desirable attributes especially for use in vehicle suspensions.

Figure 2 shows a spring element 5 similar to that of Figure 1 in every respect, except that within each reflex portion 4 there is provided a block 6 of elastomeric material. This material is conveniently moulded in situ.

A particularly strong fatigue-resistant bond is obtained if the plastics matrix material and the elastomeric material are cured together, so that cross-linking occurs between the molecules of the two materials.

This form of spring element shows a linear response to compressive loading in the z-direction during initial deflection, but as the load increases, the spring element 5 becomes stiffer. This is useful in many applications, especially for vehicle suspensions, and the invention provides a particularly simple method of obtaining such a response in a spring element which is easy to fabricate, light in weight, and highly resistant to corrosion.

Figures 3 and 4 show a spring assembly comprising two pairs of spring elements 12 disposed in two perpendicular planes, each element comprising four limbs 8 linked by reflex portions 9. The free ends of the two elements are joined by a pair of parallel bridge portions 10, and the whole assembly is formed integrally from fibre-reinforced plastics material. Apertures 15 provided in the bridge portions facilitate fixing. This form of assembly offers the advantages of a fairly linear spring response with increased stiffness under compressive loads applied in the Z-direction, combined with increased stability against column buckling. This stability is enhanced (as with Fig 1 and 2 embodiments) by provision of a large land area (such as 10) at the point of application of the load.

In this embodiment, the spring elements 12 in the X-plane can have a different spring response from those in the Y-plane. The assembly can thus very easily be designed to have a different response to shear or torque loads acting in different planes. Similar effects can be obtained by the provision of spring elements 12 in other or additional planes to those shown in Figs 3 and 4. In automotive applications this is of great advantage, since the ride characteristics can be carefully controlled having regard to different spring-rate requirements in different directions. This is impractical with springs of conventional form.

Figures 5 and 6 show a spring assembly similar to that of Figures 3 and 4, except that a block of elastomeric material 17 is provided in each reflex portion 14, in similar manner to the Figure 2 embodiment. The performance and advantages are similar to the Figure 3 embodiment, except that the addition of the blocks 17 leads to a progressive (non-linear) increase in spring stiffness in compression, following an initial substantially linear response.
In other respects, performance and advantages are similar to those outlined with reference to Figures 3 and 4.

The linear response followed by increasing stiffness, as obtained in the case of Figures 2, 5, and 6 embodiments is of particular value in vehicle (eg automotive) suspensions, and it is to be noted that the present invention provides a very simple way of obtaining such a response, as well as many other advantages.

In Figures 7 and 8, there is shown a single spring element in accordance with the invention, of the same general form as that shown in Figure 2. Thus, the spring element 18 consists of strips 19 of fibre-reinforced plastics material formed into a zig-zag comprising parallel end limbs 2, and intermediate inclined limbs 3, the limbs being linked by reflex portions 4. Moulded around the fibre-reinforced plastics material are layers 20 of elastomeric material reinforced with long continuous fibres for example. The plastics material and the elastomeric material are preferably cured together, to promote chemical cross-linking between the two materials.

In this composite structure, the use of a high proportion of elastomer which is capable of accommodating large strains permits large compressive and tensile deflections. Under large deflections, this consruction also has the great advantage that the strain is spread more evenly over the length and thickness of the material, in contrast to simpler designs in which the strain tends to be much higher in the region of the reflex portion 4. In this design, a higher proportion of the deflection is accommodated by bending of the limbs.

This form of spring is also particularly useful for automotive suspensions, in that

    a.   it provides a spring response in which stiffness increases with compression, and

    b.   elastomeric materials such as urethane possess inherent damping characteristics, so that the need for separate dampers is reduced or might be avoided.

The special performance of this form of spring element arises partly from its sandwich construction. The stiffer fibre/epoxide layers can be thought of as being free to slide one relative to another to a certain extent by virtue of the more flexible elastomer layers separating them, in a way somewhat similar to a multi-layer leaf spring. The design is extremely versatile, and performance can be varied for example by varying the proportion of elastomer 20 and plastics material zones 19 along the length of the spring, and by varying the alignment of the fibres within each zone, and/or along the length of the spring element.

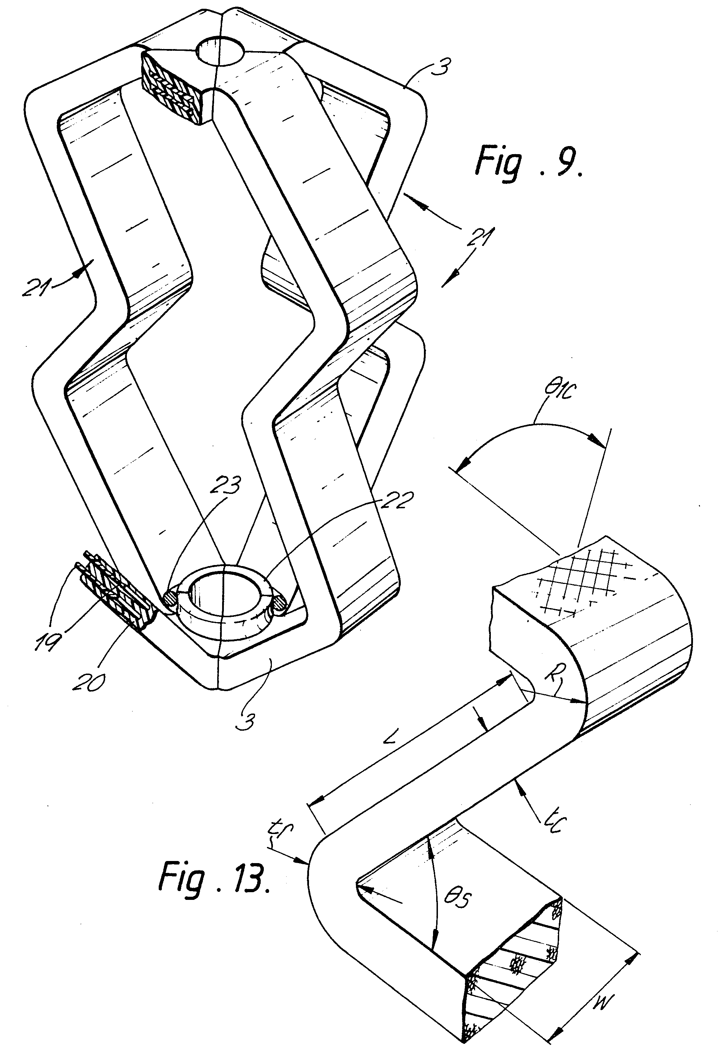

Figure 9 shows in perspective how, in a practical embodiment, a number of elements can be fitted together to form a spring assembly. In this example, four elements 21, each similar in construction to the elements 18, each have a part of an annular lip 22 moulded to the inner edge of the upper and lower-most limbs. The design is such that these limbs on all four elements mate together on assembly, and two spring circlips 23 (one shown) are used to retain upper and lower groups together. Other methods of joining the limbs are possible, such as adhesive bonding.

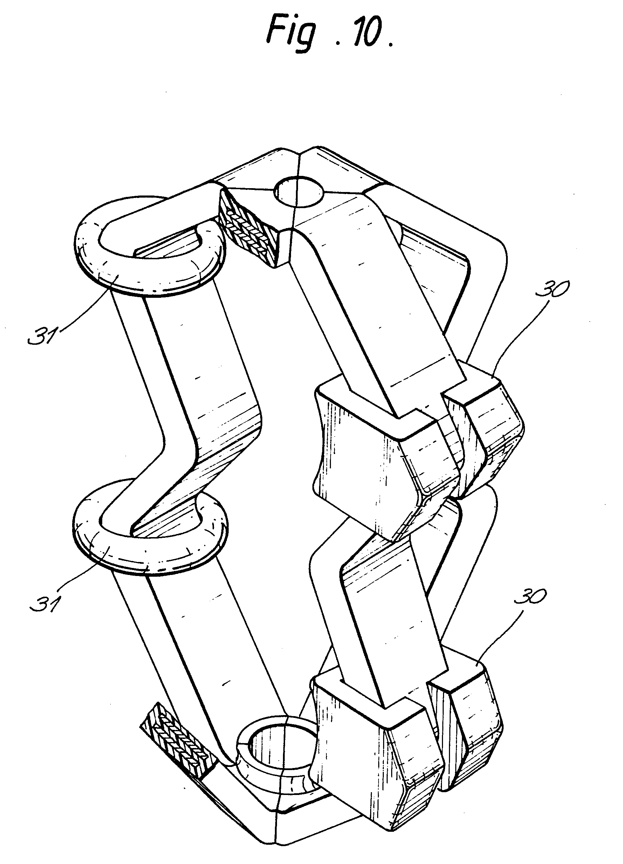

Figures 10 shows a spring of similar form to Figure 9, but in this case there are shown two different examples of how elastomer can easily be added to the reflex portions. At 30 there are shown clip-on mouldings of elastomeric material which can easily be added or removed after assembly of the spring. At 31 there are shown toroidal elastomer blocks, which would need to be put in place prior to final assembly, or could be split so as to permit later assembly. The effect of the elastomer blocks 30 or 31 is similar to that of the blocks 6 in Figure 2 or the blocks 17 in Figure 7.

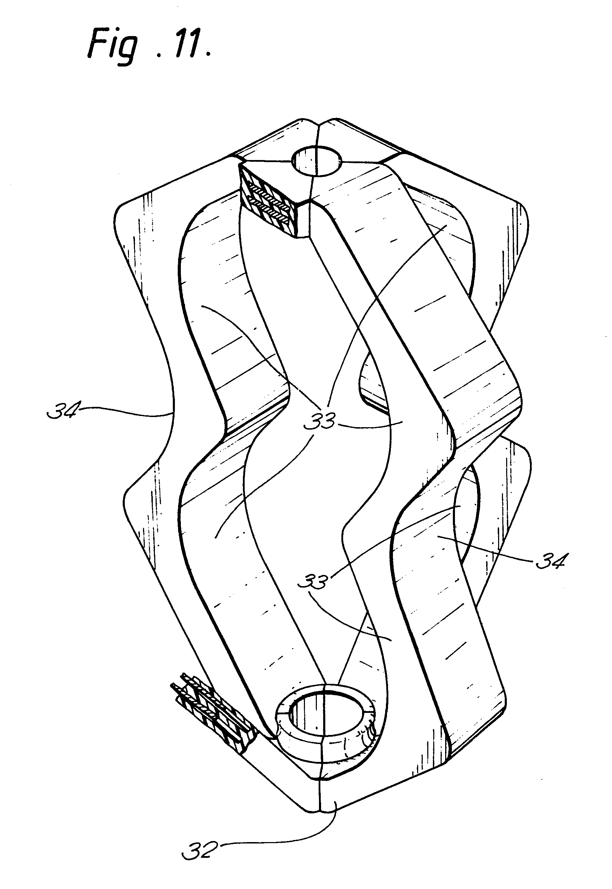

Figure 11 shows another way in which a similar effect can be obtained, by coating the entire spring assembly with elastomeric material 32. Local thickening of the elastomeric material as at 33 and 34 gives a similar effect to that of the elastomer blocks 6 and 17, 30 or 31. This embodiment has the further advantages that the elastomer coating especially if well adhered to the spring material, assists further in the distribution of stress throughout the spring body so as to minimise stress concentration. It also has the highly desirable advantage of protecting the spring body against accidental damage which could otherwise facilitate crack initiation and failure. This feature is especially advantageous in the case of springs for vehicle suspensions, for example.

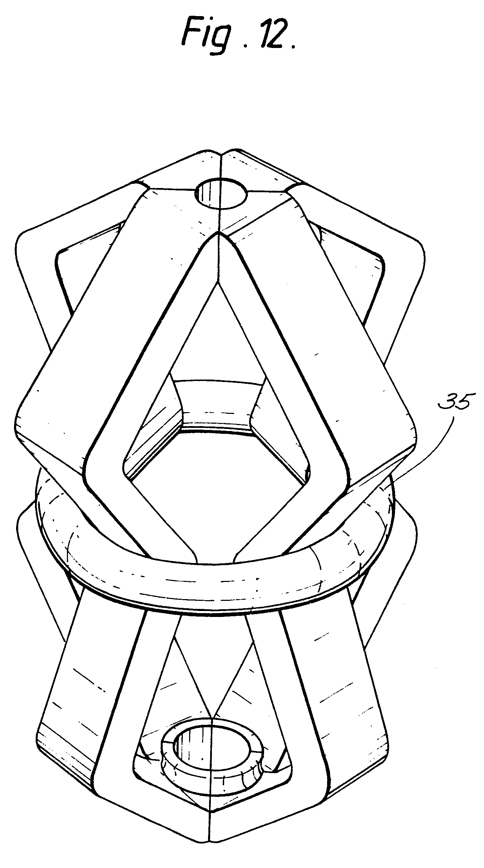

Figure 12 shows a still further embodiment again essentially similar in basic construction to Figure 9. However, in this case, a toroid 35 of elastomeric material encircles the spring body and fits within the externally concave reflex portions. Similar toroids (not shown) could additionally or alternatively be fitted within the internally concave reflex portions. The effect of these toroids is broadly similar to that described with reference to the elastomeric blocks 6, 17, 30, 31, 33 or 34.

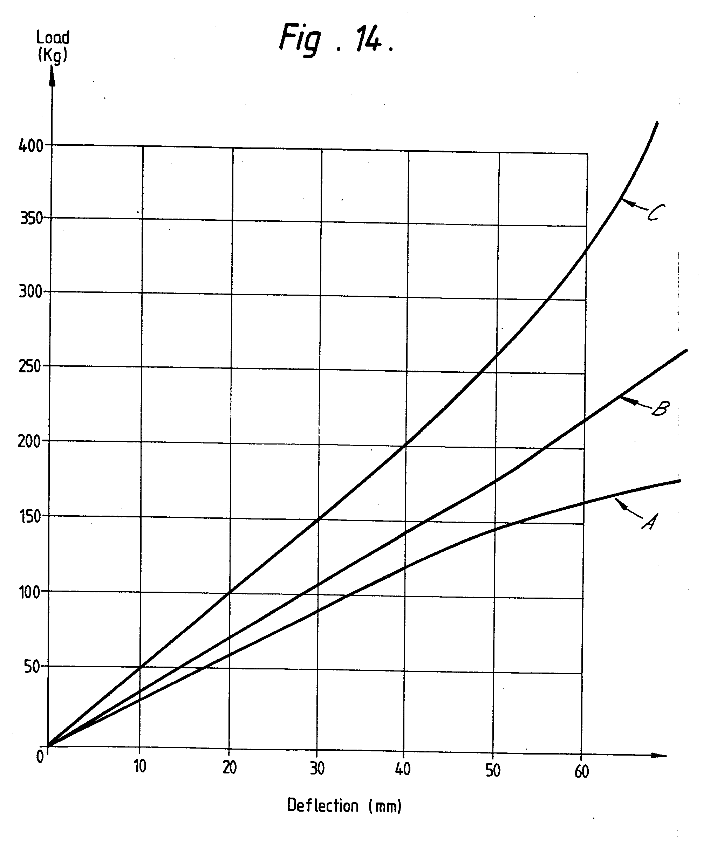

Figure 13 illustrates diagrammatically some of the geometric parameters of the spring element which can be varied by the designer so as to suit a very wide range of possible design requirements.

The spring stiffness of the element is governed principally by the length L of the limbs and their thickness $t_c$ and width w, and by the thickness $t_r$ of the reflex portions which may differ from $t_c$. The parameters $t_c$ and w can be varied along the length of the limb so as to provide a non-linear stiffness if required. The angle $\theta_s$ between adjacent limbs will govern the extent of compressive deflection possible with a given limb length L before adjacent limbs make contact, and will also contribute to the determination of spring stiffness.

Another important factor is the radius R of the reflex portion.

This contributes to governing the spring rate characteristics.

The other single most important factor is the angle of the fibre layup, $\theta_{1c}$. This is generally longitudinal with respect to the length of fibre-reinforced plastics material, in which case $\theta_{1c} = 0°$; the fibres can be angled symmetrically to the longitudinal, at $\theta_{1c} =$ up to $\pm 45°$, or a mixture of fibre alignment angles can be employed. In general, the use of angled fibre leads to a less stiff spring possessing a response which is less linear. Longitudinally aligned fibre (ie $\theta_{1c} = 0°$) tends to produce a stiffer, more linear spring response. Sufficient fibres aligned in a generally longitudinal sense must be provided in the reflex portions so as to effectively spread the high stresses from these regions into the adjacent limb regions.

Figure 14 shows, by way of example the response curves for a number of springs in accordance with the invention, plotted as load (Kilograms) vs deflection (millimetres).

In Fig 14, curve A is the response curve for a single element spring of the kind shown in Figure 1, and curves B and C are response curves for two different springs of the kind shown in Figure 2.

In each case, the (unstressed) geometry of the spring element is as follows:

Length of element (in Z-direction):   220 mm
Width of strip (w):                    50 mm
Thickness of strip ($t_c = t_r$):       4 mm

The matrix material of the strip is epoxy resin and it contains 50% by volume of E glass fibres. The fibres are aligned 50% longitudinally ($\theta_{1c} = 0°$) and 50% inclined ($\theta_{1c}\ 0 \pm 45°$).

The curves B and C embodiments have elastomer block 6 moulded into each reflex portion. For curve B, the thickness of the block ($t_b$ - see Fig 2) is 30 mm, and for curve C, $t_c = 46$ mm.

As can be seen from curve A, the plain spring element without elastomer blocks has an initial linear response with a spring stiffness K = 3.11 Kg/mm up to 45 mm deflection. Thereafter, the stiffness decreases somewhat.

Curve B shows how the addition of the elastomer blocks reverses this response. The initial response remains linear; up to about 50 mm deflection K = 3.74 Kg/mm. Thereafter, however, the stiffness increases; at 75 mm deflection K = 4.6 Kg/mm.

Curve C shows how the use of thicker elastomer blocks accentuate this effect. Up to about 40 mm deflection, K has a constant value of about 5 Kg/mm. However, by 65 mm deflection, the stiffness has increased to 15.5 Kg/mm, and will continue to increase with increasing deflection. This shows that it is possible to obtain performance which will be good for automotive suspensions, where a stiffness ratio of between 3 and 5 from initial to total deflection is generally the design aim.

CLAIMS

1.  A spring element comprising a continuous strip of fibre-reinforced plastics material including reinforcing fibres within a plastics matrix, characterised in that the strip is disposed when unstressed in the form of a zig-zag consisting of a plurality of limbs lying in substantially the same plane, each adjacent pair of limbs being joined together at one end by a link portion of reflex form and integral therewith, and wherein the fibres are aligned generally in the longitudinal sense of the strip.

2.  A spring element according to claim 1 wherein 100% of fibres are aligned in the longitudinal direction of the strip.

3.  A spring element according to claim 1 wherein 100% of fibres are aligned at up to $\pm$ 45° to the longitudinal direction of the strip.

4.  A spring element according to claim 1 wherein 30 to 70% of fibres are aligned in the longitudinal direction of the strip and 30 to 70% of fibres are aligned at $\pm$ 30° to $\pm$ 60° to the longitudinal direction of the strip.

5.  A spring element according to any one of claims 1 to 4 characterised in that the ratio of the limb length to the radius of the reflex portions is in the range 0.2 to 200.

6.  A spring element according to claim 5 characterised in that the said ratio is in the range 0.5 to 30.

7.  A spring element according to claim 1 and characterised in that it comprises one or more distinct zones of a resilient material.

8.  A spring element according to claim 7 characterised in that a zone of resilient material is constituted by a block of the resilient material located between an adjacent pair of limbs and within the reflex section of the link portion joining that pair.

9.  A spring element according to claim 7 or claim 8 characterised in that the zone of resilient material is constituted by an annular or part-annular block (30, 31) which is fitted to the spring so as to surround the strip at least partially in the region of a reflex portion.

10.  A spring element according to claim 7 or claim 8 characterised in that the spring element is coated with a layer (32) of resilient material.

11.  A spring element according to claim 7 or claim 8 characterised that the layer (32) of resilient material is locally thickened (33, 34) in the concavities of the reflex portions.

12. A spring element according to claim 7 or claim 8 characterised in that a zone of resilient material is constituted by a layer of the resilient material running lengthwise of the strip between zones of matrix material.

13. A spring element according to any one of claims 7 to 12 characterised in that the resilient material is an elastomeric material which is cured in contact with and simultaneously with the plastics matrix material, so that molecular cross-linking is present between the elastomeric material and the plastics matrix material.

14. A spring element according to claim 13 characterised in that the elastomeric material is selected from the group comprising urethane, polyurethanes, silicone elastomer, natural rubber, polyisoprene, styrene butadiene, butadiene, polyacrylics, isobutene, isoprene (butyl rubber), chloroprene (neoprene), nitrile butadiene, chlorosulphonated polyethylene, chlorinated polyethylene, ethylene propylene, fluorocarbon, epichlorohydrin, fluorosilicones, co-polyester, styrene co-polymer and olefins.

15. A spring element according to any one of claims 2 to 14 characterised in that the resilient material contains reinforcing fibres.

16. A spring element according to any one preceding claim characterised in that the matrix material is an epoxy, polyester, or vinylester resin, polyamide, polyimide, polyetheretherketone, polyethersulphone, or polyetherimide.

17. A spring element according to any one preceding claim characterised by reinforcing fibres within the matrix selected from the group comprising carbon fibres, glass fibres, aromatic polyamide fibres, metallic fibres or wires, and mixtures including these fibres.

18. A spring element substantially as hereinbefore described with reference to Figure 1, Figure 2 or Figures 7 and 8 of the accompanying drawings.

19. A spring assembly characterised by a plurality of spring elements each in accordance with any one preceding claim.

20. A spring assembly according to claim 19 characterised in that the plane of the limbs of at least one spring element differs from that of at least one other.

21. A spring assembly according to claim 20 characterised in that each spring element is so disposed that its plane lies radially with respect to a common axis.

22. A spring element according to claim 21 characterised by a ring of resilient material (35) fitted within the concavities of the reflex portions of the spring elements.

23. A spring assembly substantially as hereinbefore described with reference to Figures 3 and 4, Figures 5 and 6, or Figures 9, 10, 11 or 12 of the accompanying drawings.

24. A composite spring structure comprising a plurality of spring assemblies each in accordance with any one of claims 19 to 23 and nested one within another.

0132048

**Fig.1.**

**Fig.2.**

**Fig.3.**

**Fig.4.**

0132048

Fig. 5.

Fig. 7.

Fig. 6.

Fig. 8.

Fig . 9.

21

3

21

23

22

19

20

3

$\theta_{1C}$

$R_1$

$L$

$t_r$

$t_C$

$\theta_S$

Fig . 13.

W

# Fig . 10 .

*Fig .11.*

0132048

# Fig . 12.

35

0132048

Fig . 14 .

Load
(Kg)

400

350

300

250

200

150

100

50

0

10        20        30        40        50        60

Deflection (mm)

C

B

A

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| A | US-A-2 913 240 (MOHR)<br><br>* Whole document * | 1,16, 17,23 | F 16 F 1/36<br>B 60 G 11/00 |
| A | GB-A-1 511 692 (THE SECRETARY OF STATE FOR DEFENCE, LONDON)<br>* Whole document and in particular page 2, lines 29-106; figures 1,2 * | 1,7,16 ,17 | |
| A | US-A-2 878 013 (PIODI)<br>* Column 1, line 61 - column 2, line 8; figure 1 * | 8 | |
| A | GB-A- 916 123 (VICKERS-ARMSTRONGS (AIRCRAFT) LTD.)<br>* Claim 1; figures 1,2 * | 1 | **TECHNICAL FIELDS SEARCHED (Int. Cl. ³)** |
| A | US-A-3 737 155 (KARLAN) | | F 16 F<br>B 60 G<br>B 29 D<br>B 29 H |
| A | US-A-3 995 901 (FILBERT) | | |
| A | GB-A-2 055 173 (DUNLOP) | | |

The present search report has been drawn up for all claims

| Place of search THE HAGUE | Date of completion of the search 03-10-1984 | Examiner WELSCH H.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82